Europäisches Patentamt

European Patent Office

Office européen des brevets

(19)

(11) **EP 0 706 937 B1**

(12) # FASCICULE DE BREVET EUROPEEN

(45) Date de publication et mention
de la délivrance du brevet:
**29.07.1998 Bulletin 1998/31**

(51) Int. Cl.⁶: **B64C 27/59**

(21) Numéro de dépôt: **95402253.9**

(22) Date de dépôt: **09.10.1995**

(54) **Dispositif de commande du pas des pales d'un rotor de giravion**

Vorrichtung zur Verstellsteuerung der Blätter eines Hubschrauberrotors

Device to control the pitch of the blades of an helicopter rotor

(84) Etats contractants désignés:
**DE GB IT**

(30) Priorité: **13.10.1994 FR 9412228**

(43) Date de publication de la demande:
**17.04.1996 Bulletin 1996/16**

(73) Titulaire: **EUROCOPTER**
**F-13725 Marignane Cédex (FR)**

(72) Inventeur: **Certain, Nicolas**
**13090 Aix-en-Provence (FR)**

(74) Mandataire:
**Bérogin, Francis et al**
**Cabinet Plasseraud**
**84, rue d'Amsterdam**
**75440 Paris Cedex 09 (FR)**

(56) Documents cités:
**US-A- 3 102 597**          **US-A- 3 729 272**
**US-A- 4 227 856**

## Description

L'invention concerne un dispositif de commande de pas des pales d'un rotor de giravion, du type à plateaux cycliques, sur lequel chaque pale est, d'une part, entraînée en rotation autour d'un axe de rotation d'un mât rotor par l'intermédiaire d'un moyeu, solidaire du mât rotor, et, d'autre part, solidaire en rotation, autour d'un axe longitudinal de changement de pas de la pale, d'un levier de pas articulé à une bielle de pas reliée à un plateau tournant avec le mât rotor et appartenant à un mécanisme à plateaux cycliques, dans lequel le plateau tournant est monté en rotation sur un plateau non tournant pouvant coulisser axialement le long du mât rotor et s'incliner dans toute direction par rapport au mât rotor, sous l'action d'actionneurs de commandes de vol.

Le dispositif de commande de pas de l'invention est en particulier destiné à équiper un rotor principal d'un hélicoptère à très grande vitesse, notamment en translation vers l'avant.

Indépendamment des couplages pas-battement et pas-traînée, les dispositifs de commande du pas des pales d'un rotor d'hélicoptère comprenant un mécanisme classique à plateaux cycliques permettent de produire, en repère tournant avec le mât rotor et le moyeu, d'une part, un pas collectif simultanément donné à toutes les pales, et, d'autre part, un pas cyclique, s'ajoutant au pas collectif et appliqué à chaque pale à la fréquence de rotation.

On sait que l'équilibre du rotor, pour assurer l'équilibre et la traction d'un hélicoptère en vol de translation vers l'avant, est obtenu par le développement de portances voisines, voire égales, sur les côtés opposés du disque rotor, de part et d'autre de l'axe longitudinal de l'hélicoptère, et par l'inclinaison du disque rotor vers l'avant de l'hélicoptère. A cet effet, en raison de la dissymétrie des vitesses entre la ou les pales avançantes et la ou les pales reculantes, par rapport à la direction de déplacement de l'hélicoptère, il est connu de donner aux pales un pas cyclique qui diminue le pas ou l'incidence de la ou des pales avançantes alors que celui ou celle de la ou des pales reculantes est augmenté(e).

Mais le respect de ces contraintes est limité par l'apparition de phénomènes de décrochage de la ou des pales reculantes ou arrière, dont le pas est trop important, et de chocs transsoniques sur la ou les pales avançantes ou avant.

Le fonctionnement d'un rotor à très grande vitesse est ainsi limité par les phénomènes de décrochage et de divergence de traînée. Selon des études de la demanderesse, environ 15 à 20 % de la puissance développée nécessaire à un vol d'hélicoptère à très grande vitesse sont consommés par les deux phénomènes aérodynamiques précités.

A titre d'exemple, pour un hélicoptère d'une masse de l'ordre de 4250 kg à une vitesse de 360 km/h, les études précitées de la demanderesse montrent que la puissance consommée pour ce vol à très grande vitesse se répartit en:

- 60 % de puissance nécessaire à vaincre la traînée du fuselage,
- 5 % de puissance induite nécessaire à la sustentation, et
- 35 % de traînée des profils des pales, dont les limites de fonctionnement essentielles sont, d'une part, le décrochage des profils de pale aux incidences élevées, occasionnant une augmentation importante de traînée et une perte de portance, et, d'autre part, le comportement transsonique des profils de pale aux nombres de Mach élevés, ce qui occasionne une divergence de traînée à portance nulle.

Un hélicoptère en translation à très grande vitesse est particulièrement confronté à ces limites, en raison de la dissymétrie importante des vitesses entre sa ou ses pales avançantes, à un nombre de Mach compris entre 0,5 et 0,9, et sa ou ses pales reculantes, à nombre de Mach compris entre 0 et 0,3.

Les études précitées de la demanderesse montrent que le décrochage des profils et leur comportement transsonique correspondent à 50 % environ de la traînée de profils, intervenant elle-même pour les 35 % de la puissance totale consommée. Il en résulte que, sur cette part de la puissance, des gains potentiels envisageables en remédiant aux problèmes de décrochage des profils et de chocs transsoniques s'élèvent à environ 17 % de cette puissance totale consommée.

Un but de l'invention est de proposer un dispositif de commande de pas capable d'appliquer une composante de pas bicyclique, qui soit indépendante du pas général ou collectif, afin d'obtenir un pas faible sur la ou les pales avançantes ainsi qu'un pas modéré sur la ou les pales reculantes et qui, éventuellement, soit d'un déphasage déterminé par rapport à la commande monocyclique classique.

Si on désigne par $\Omega$ la fréquence de rotation du rotor, un autre but de l'invention est de proposer un dispositif de commande de pas tel que cette commande bicyclique de pas permette aussi de réduire l'excitation, à la fréquence 2 $\Omega$, des composantes d'efforts tranchants longitudinal et latéral du torseur dynamique de la tête d'un rotor tripale. En effet, lors d'essais d'un hélicoptère à un seul rotor principal tripale, de type "GAZELLE AS 341" de la société Aérospatiale SNI, équipé d'un système de commande de pas multicyclique, la commande qui est apparue optimale, en vue de la réduction du niveau vibratoire en cabine, et donc du torseur dynamique de la tête de rotor, était une commande bicyclique (de fréquence 2 $\Omega$), superposée à la composante monocyclique classique du pas des pales.

En accord avec la théorie du comportement dynamique des rotors, il est également possible de prétendre qu'une commande de pas bicyclique peut influer avantageusement sur la composante dite "de pompage", c'est-à-dire suivant l'axe rotor, du torseur dynamique d'un rotor bipale, ainsi que sur le mode de déformation "en ciseaux" d'un rotor quadripale.

Pour les autres types de rotor, à cinq pales et plus, la commande de pas bicyclique ne permet pas d'influer favorablement sur le torseur dynamique de la tête de rotor.

L'intérêt de l'invention réside alors dans l'augmentation des performances en terme de puissance consommée par le rotor, pour atteindre une vitesse de vol donnée.

A cet effet, le dispositif de commande de pas du type présenté ci-dessus se caractérise, selon l'invention, en ce qu'il comprend un plateau tournant secondaire, solidaire en rotation du mât rotor et en translation axiale du plateau non-tournant, mais non inclinable par rapport au mât rotor, et, pour chaque pale, une liaison articulée à deux leviers et quatre articulations, telle que ses deux leviers s'articulent l'un sur l'autre par une première articulation, qu'un premier levier s'articule par ailleurs par une seconde articulation sur un point fixe en repère tournant avec le plateau tournant secondaire, et que le second levier s'articule par ailleurs sur la bielle de pas correspondante par une troisième articulation, distincte de l'articulation de la bielle de pas sur le levier de pas, et le second levier est de plus articulé sur un point fixe en repère tournant avec le plateau tournant par la quatrième articulation, distincte des autres articulations, de sorte que les inclinaisons des plateaux cycliques par les actionneurs induisent des manoeuvres angulaires des leviers de chaque liaison articulée commandant le pas de la pale correspondante par la manoeuvre de la bielle de pas correspondante.

Avantageusement, afin d'améliorer la compacité et de simplifier la réalisation des articulations du dispositif, pour chaque liaison articulée, la première articulation relie les deux leviers par l'une de leurs extrémités, l'autre extrémité du premier levier étant reliée à un point fixe du plateau tournant secondaire par la seconde articulation, tandis qu'une autre extrémité du second levier est reliée par la troisième articulation à une extrémité de la bielle de pas correspondante, articulée par son autre extrémité sur une extrémité du levier de pas, la quatrième articulation reliant le second levier à l'extrémité d'un bras solidaire du plateau tournant.

Lorsque, de manière connue, le plateau non-tournant est monté inclinable autour d'une rotule montée elle-même coulissante axialement autour d'un guide tubulaire fixe entourant le mât rotor, il est avantageux que le plateau tournant secondaire du dispositif de l'invention soit solidaire de la rotule en translation axiale. Dans une réalisation de structure avantageusement simple, ceci est obtenu en montant le plateau tournant secondaire rotatif à l'aide d'au moins un roulement sur un guide tubulaire secondaire, solidaire de la rotule en translation axiale autour du guide tubulaire fixe.

L'entraînement en rotation du plateau tournant secondaire peut être assuré, comme cela est connu pour l'entraînement en rotation du plateau tournant, par au moins un compas tournant, articulé d'une part sur le plateau tournant secondaire et d'autre part sur le mât rotor. Mais, selon l'invention, cet entraînement en rotation peut également, de manière simple, être assuré par au moins un doigt, fixé au mât rotor en saillie latéralement sur ce dernier, et relié au plateau tournant secondaire par une liaison axialement coulissante.

De même, l'entraînement en rotation du plateau tournant peut être assuré par au moins un compas tournant, articulé sur le plateau tournant et sur le mât rotor, de manière classique, ou, selon des réalisations propres à l'invention, par le plateau tournant secondaire, par l'intermédiaire d'au moins un compas tournant articulé sur le plateau tournant et sur le plateau tournant secondaire par au moins une liaison pivotante autour d'un axe sensiblement perpendiculaire à l'axe rotor, ou par l'intermédiaire d'au moins une liaison articulée, faisant fonction de compas tournant, afin de réduire l'encombrement et le poids du dispositif.

Dans ce dernier cas, il est avantageux que, pour la liaison articulée faisant fonction de compas tournant, la première articulation est constituée d'une liaison pivotante comprenant une chape du premier ou du second levier dans laquelle une douille respectivement du second ou du premier levier est montée pivotante autour d'un axe sensiblement perpendiculaire à l'axe rotor, la seconde articulation est constituée d'une liaison pivotante comprenant une chape du plateau tournant secondaire ou du premier levier dans laquelle une douille respectivement du premier levier ou du plateau tournant secondaire est montée pivotante autour d'un axe sensiblement perpendiculaire à l'axe rotor, la troisième articulation est constituée d'une liaison à rotule montée dans le second levier ou la bielle de pas et retenue dans une chape respectivement de la bielle de pas ou du second levier, et la quatrième articulation est constituée d'une liaison à rotule montée dans le second levier ou un bras du plateau tournant et retenue dans une chape respectivement dudit bras du plateau tournant ou du second levier.

Dans un mode de réalisation, et pour chaque liaison articulée, le second levier est constitué d'un bras triangulaire dont les deux sommets aux extrémités d'un premier côté sont reliés par la première et la troisième articulations respectivement au premier levier et à la bielle de pas correspondante, et dont le troisième sommet du bras triangulaire est relié par la quatrième articulation à un bras correspondant du plateau tournant.

Dans ce cas, il est avantageux que, pour au moins une liaison articulée, et de préférence pour toutes les liaisons articulées ne faisant pas fonction de compas tournant, le plateau tournant secondaire présente une chape dans laquelle est retenue une rotule d'articulation d'une extrémité du premier levier correspondant, dont l'autre extrémité est aménagée en chape dans laquelle est retenue une rotule d'articulation de l'un des sommets aux extrémités du premier côté du bras triangulaire, le sommet à l'autre extrémité du premier côté dudit bras triangulaire étant aménagé en chape dans laquelle la bielle de pas correspondante est articulée par un pivot, le troisième sommet du bras triangulaire étant articulé par une rotule dans une chape ménagée à l'extrémité du bras correspondant du plateau tournant, ce qui permet d'obtenir une architecture particulièrement ramassée autour du mât rotor.

Selon un second mode de réalisation, et pour chaque liaison articulée, le second levier peut être constitué d'un bras coudé, dont les extrémités sont reliées au premier levier et à la bielle de pas correspondante respectivement par la première et la troisième articulations, et dont la partie centrale coudée est reliée à un bras correspondant du plateau tournant par la quatrième articulation.

Que le second levier soit un bras coudé ou un bras triangulaire, les première et troisième articulations peuvent être des articulations à rotule, tandis que la quatrième articulation est une liaison pivotante autour d'un axe sensiblement perpendiculaire au plan radial passant par l'axe rotor et par le centre de la liaison pivotante.

Avantageusement, dans une variante du dispositif permettant de régler la phase de la commande bicyclique par rapport à la phase de la commande monocyclique, le centre de l'articulation à rotule constituant la troisième articulation est déporté latéralement par rapport au plan radial passant par l'axe rotor et par le centre de la liaison pivotante constituant la quatrième articulation, l'amplitude du déport latéral étant une fonction croissante du déphasage recherché entre la commande bicyclique et la commande monocyclique.

Dans une réalisation simple et compacte de cette variante, il est avantageux que, pour chaque liaison articulée, le plateau tournant secondaire présente une chape dans laquelle est retenue, pour former la seconde articulation, une rotule montée dans une extrémité du premier levier, dont l'autre extrémité est également équipée d'une rotule retenue, pour former la première articulation, dans une chape à une extrémité du bras coudé, dont la partie centrale coudée comprend une douille retenue à pivotement, pour former la quatrième articulation, autour d'un axe dans une chape ménagée à l'extrémité du bras correspondant du plateau tournant, l'autre extrémité du bras coudé présentant une chape déportée parallèlement à l'axe de pivot de la douille, et dans laquelle est retenue, pour former la troisième articulation, une rotule montée dans l'extrémité correspondante de la bielle de pas correspondante. Dans une telle réalisation, l'entraînement en rotation du plateau tournant par le plateau tournant secondaire est avantageusement assuré par au moins un compas tournant classique.

Le dispositif selon l'invention, pour la commande du pas des pales d'un rotor, présente ainsi l'avantage d'offrir des gains de puissance, notamment au voisinage du décrochage du rotor, et de retarder le décrochage de la ou des pales reculantes. Le dispositif intervient ainsi sur le décrochage de chaque pale reculante, dont il réduit les effets néfastes par diminution de son incidence locale. De plus, le dispositif repousse les limites liées au phénomène de décrochage des pales, telles que les efforts de commande, le niveau vibratoire en cabine et les moments dynamiques le long des pales. Le dispositif selon l'invention présente en outre l'avantage supplémentaire de pouvoir facilement être adapté, en rattrapage, sur les hélicoptères existants.

Enfin, le dispositif de commande de pas selon l'invention présente un encombrement axial et radial particulièrement réduit, et forme un ensemble compact avec le mécanisme à plateaux cycliques qu'il incorpore.

D'autres caractéristiques et avantages de l'invention ressortiront de la description donnée ci-dessous, à titre non limitatif, d'exemples de réalisation décrits en référence aux dessins annexés sur lesquels :

- la figure 1 est une demi-vue schématique, en partie en coupe axiale et en partie en élévation latérale, d'un rotor principal d'hélicoptère équipé d'un dispositif de commande de pas selon l'invention, avec un mécanisme à plateaux cycliques en position telle que le pas cyclique soit nul,
- la figure 2 est une vue schématique analogue du dispositif de commande de pas de la figure 1, dans une position de pas cyclique non nul, après inclinaison des plateaux du mécanisme à plateaux cycliques,
- la figure 3 est une vue partielle en coupe axiale d'un premier exemple de dispositif correspondant aux figures 1 et 2,
- la figure 4 est une vue en partie en coupe selon IV-IV et en partie de dessus du dispositif de la figure 3,
- la figure 5 est une vue en coupe partielle selon V-V de la figure 4,
- les figures 6 et 7 sont des vues respectivement analogues aux figures 3 et 4 pour un second exemple de réalisation à commande bicyclique déphasée d'une valeur réglée par rapport à la commande monocyclique, et
- la figure 8 est une vue partielle en élévation latérale selon la flèche VIII de la figure 7.

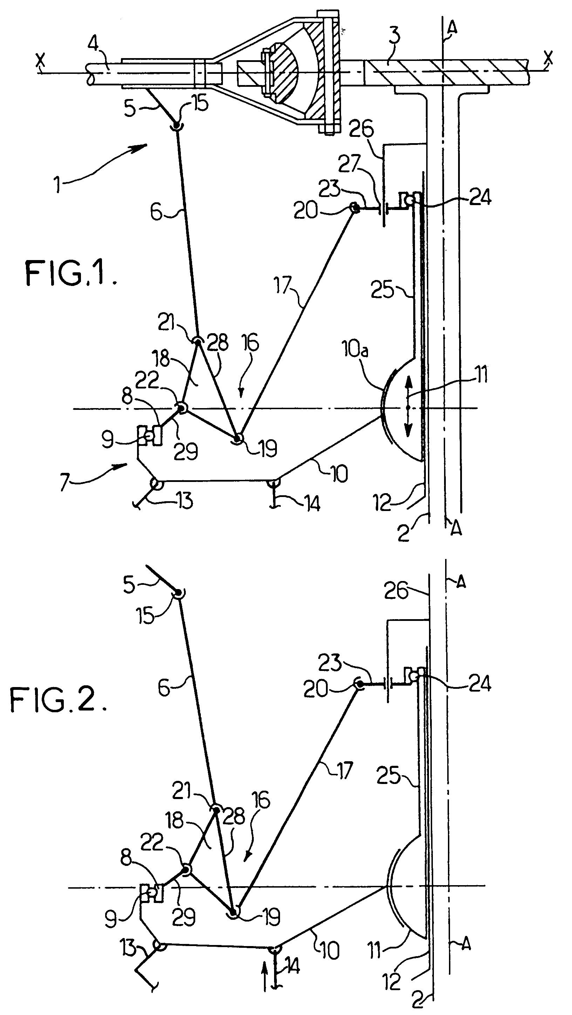

Sur la figure 1, un rotor principal 1 d'hélicoptère, représenté schématiquement, comprend un mât rotor 2 entraîné par sa base en rotation autour de l'axe de rotation A-A du rotor, et solidaire à son extrémité supérieure d'un moyeu 3. Chacune des pales telles que 4 du rotor est reliée au moyeu 3 de sorte à être entraînée en rotation avec ce dernier autour de l'axe rotor A-A, et de manière à pouvoir pivoter par rapport au moyeu 3 autour de son axe longitudinal de changement de pas X-X, sensiblement radial par rapport à l'axe A-A. Pour modifier le pas de la pale 4, ou son incidence autour de son axe de pas X-X, la pale 4 est solidaire en rotation autour de cet axe X-X d'un levier de pas 5. Pour commander le pas de la pale 4, le levier 5 est articulé par son extrémité sur l'extrémité supérieure d'une bielle de pas 6, s'étendant sensiblement dans la direction de l'axe rotor A-A, et reliée par son extrémité inférieure au plateau tournant 8 d'un mécanisme à plateaux cycliques 7.

Dans ce mécanisme 7, de manière classique, le plateau tournant 8 peut être entraîné en rotation par le mât rotor 2 à l'aide d'au moins un compas tournant (non représenté) articulé par une extrémité sur le mât 2 et par l'autre extrémité sur le plateau tournant 8. Ce dernier est de plus monté en rotation, à l'aide d'un roulement à billes 9, coaxialement sur un plateau non-tournant 10, qui peut s'incliner dans toute direction par rapport à l'axe A-A autour du mât 2 en étant monté par son moyeu 10a autour d'une rotule centrale 11, et qui peut être translaté parallèlement à l'axe rotor A-A par le coulissement axial de la rotule 11 autour d'un guide tubulaire cylindrique 12 non-tournant, car fixé à des points fixes de la structure de l'hélicoptère, et entourant le mât rotor 2. Le plateau non-tournant 10 est retenu contre toute rotation autour de l'axe rotor A-A par un compas non-tournant 13, partiellement représenté, articulé par une extrémité sur le plateau non-tournant 10 et par l'autre à un point fixe de la structure de l'hélicoptère. Les mouvements d'oscillation et de translation du plateau non-tournant 10 sont commandés par des actionneurs de commande de vol, en général au nombre de trois, et dont un seul 14 est représenté sur la figure 1, et pouvant être des bielles, des vérins ou des servocommandes.

Dans les dispositifs classiques de commande de pas, l'extrémité inférieure de la bielle de pas 6 est directement articulée sur le plateau tournant 8.

Mais, dans le dispositif de l'invention, pour chaque pale 4, une liaison articulée 16, comprenant deux leviers 17 et 18 et quatre articulations 19, 20, 21 et 22, est montée entre le plateau tournant 8, la bielle de pas 6, et un plateau tournant secondaire 23, qui est solidaire, d'une part, en rotation du mât rotor 2, d'autre part, en translation axiale (selon l'axe rotor A-A) du plateau non-tournant 10, mais qui est bloqué en inclinaison par rapport au mât rotor 2.

Le plateau tournant secondaire 23 est solidaire en translation axiale du plateau non-tournant 10 en étant solidaire en translation axiale de la rotule 11. Ceci est assuré par le montage rotatif du plateau tournant secondaire 23 à l'aide d'un roulement à billes 24 autour de la partie supérieure d'un guide tubulaire secondaire 25, rendu solidaire de la rotule 11 en translation axiale autour du guide tubulaire fixe 12.

Le plateau tournant secondaire 23 peut être entraîné en rotation par le mât rotor 2, comme le plateau tournant 8, d'une manière connue à l'aide d'un compas tournant articulé par une extrémité sur le mât rotor 2 et par l'autre extrémité sur le plateau tournant secondaire 23. Mais, comme représenté sur la figure 1, l'entraînement en rotation du plateau tournant secondaire 23 peut être assuré par un doigt 26 en équerre, fixé au mât 2 en saillie latéralement sur ce dernier, et dont la partie parallèle au mât 2 et à son axe A-A traverse axialement le plateau 23 par une liaison axialement coulissante 27.

L'extrémité inférieure du premier levier 17 de la liaison 16 est reliée, par la première articulation 19 de cette liaison 16, au sommet à l'extrémité inférieure d'un premier côté 28 du second levier 18, en forme de bras triangulaire, de cette liaison 16. Par son extrémité supérieure, le premier bras 17 est relié par la seconde articulation 20 de la liaison 16 à un point fixe à la périphérie du plateau tournant secondaire 23. Par le sommet à l'extrémité supérieure de son premier côté 28, le second levier 18 est relié par la troisième articulation 21 de la liaison 16 à l'extrémité inférieure de la bielle de pas 6 correspondante, articulée en 15 par son extrémité supérieure sur le levier de pas 5. Par son troisième sommet, le bras triangulaire 18 est relié par la quatrième articulation 22 de la liaison 16 à l'extrémité d'un bras 29 correspondant, solidaire du plateau tournant 8.

Ainsi, par les articulations 20 et 22, le levier rectiligne 17 et le levier triangulaire 18 sont articulés autour de points fixes en repère tournant, respectivement sur le plateau tournant secondaire 23 et sur le plateau tournant 8.

En conséquence, chaque bras 29, solidaire du plateau tournant 8 dans ses mouvements de rotation sur le plateau non-tournant 10 et de translation et d'inclinaison avec ce plateau non-tournant 10 le long et autour du mât 2, peut manoeuvrer angulairement les leviers 17 et 18 de la liaison 16 correspondante pour actionner la bielle de pas 6 correspondante, de manière à obtenir une commande de pas optimisée de la pale 4 correspondante.

Dans cet exemple, le premier côté 28 du bras 18 est le plus grand côté de ce bras triangulaire 18, et correspond schématiquement à l'axe longitudinal du bras-levier de renvoi 18, dont les extrémités sont, d'une part, la première articulation 19 le reliant à l'autre levier 17, et, d'autre part, la troisième articulation 21 le reliant à la bielle de pas 6.

Lorsque le dispositif est dans la position de la figure 1, le pas cyclique est nul, car les articulations 22, correspondant aux points d'action du plateau tournant 8 sur toutes les liaisons articulées 16, sont dans un même plan radial, perpendiculaire à l'axe A-A de rotation du rotor et passant par le centre de la rotule 11, de sorte que pour toute position en azimuth d'une articulation 22, autour de l'axe rotor A-A, lors d'une rotation du plateau tournant 8, la liaison articulée 16 correspondante conserve la même position par rapport à son articulation 20 sur le plateau tournant secondaire 23, et l'articulation 15 de l'extrémité supérieure de la bielle de pas 6 correspondante sur le levier de pas 5 conserve également une même position lors de cette rotation, ce qui signifie que le pas cyclique de la pale 4 correspondante, donc aussi de toutes les pales, est nul.

Sur la figure 2, la position du dispositif est différente de celle de la figure 1 car le plateau non-tournant 10 a été incliné par les actionneurs 14 autour de la rotule 11 dans un sens qui a pivoté la partie de gauche du plateau non-tournant 10, visible sur la figure 2, vers le haut sur la figure, et donc la partie de droite (non représentée) vers le bas. Cette inclinaison du plateau non-tournant 10, et donc également du plateau tournant 8, a pour conséquence qu'au cours d'une rotation autour de l'axe rotor A-A, lorsqu'une liaison articulée 16 est déplacée sur la gauche de l'axe A-A, son articulation 22 sur le bras 29 du plateau tournant 8 se trouve au-dessus du plan radial perpendiculaire à l'axe A-A et passant par le centre de la rotule 11, tandis que lorsque cette liaison articulée 16 est déplacée sur la droite de l'axe A-A, son articulation 22 est en-dessous de ce plan radial passant par le centre de la rotule 11. Lors d'une rotation, chaque articulation 22 occupe des positions successives différentes, ce qui commande, par appui de la liaison articulée 16 correspondante sur son articulation 20 sur le plateau tournant secondaire 23, le basculement alternatif du bras triangulaire 18 autour de l'articulation 22, de sorte à exercer alternativement des efforts de compression et de traction sur la bielle de pas 6 et de commander ainsi par l'articulation 15 les débattements angulaires du levier de pas 5 et donc la variation du pas de la pale correspondante. Sur la figure 2, la position de l'articulation 22 au-dessus du plan radial passant par le centre de la rotule 11 entraîne le basculement du bras triangulaire 18, par rapport à sa position de la figure 1, qui aligne les trois articulations 19, 21 et 15 sur un même axe défini par le grand côté 28 du bras triangulaire 18 et la bielle de pas 6 dans le prolongement l'un de l'autre, ce qui correspond à une compression appliquée sur la bielle 6 ainsi déplacée vers le haut en faisant pivoter le levier de pas 5 et donc la pale 4 correspondante autour de l'axe de pas X-X correspondant.

Ainsi, le dispositif de l'invention s'adapte sur un mécanisme à plateaux cycliques 7 de commande du pas des pales d'un rotor d'hélicoptère qui permet de produire en repère tournant un pas collectif ou général (par translation axiale des plateaux non-tournant 10 et tournant 8) et un pas monocyclique (par inclinaison des plateaux 10 et 8), ce pas monocyclique étant le pas cyclique à la fréquence de rotation $\Omega$ du rotor. L'adoption du dispositif de l'invention permet de proposer une commande cyclique plus complexe en superposant une composante bicyclique à la composante monocyclique classique, grâce à une disposition mécanique appropriée permettant, après un ajustement correct des phases des composantes monocyclique et bicyclique, d'améliorer le fonctionnement du rotor. Cette amélioration porte notamment sur le rendement aux très grandes vitesses (supérieures à environ 330 km/h) que les hélicoptères actuels n'atteignent que rarement, mais qui correspondront prochainement aux vitesses de croisière d'hélicoptères de nouvelles générations. De plus, le dispositif de l'invention permet également d'améliorer le comportement vibratoire d'un rotor aux vitesses maximales des hélicoptères actuels, de sorte que le torseur d'excitation dynamique en particulier des rotors tripale peut être notablement réduit.

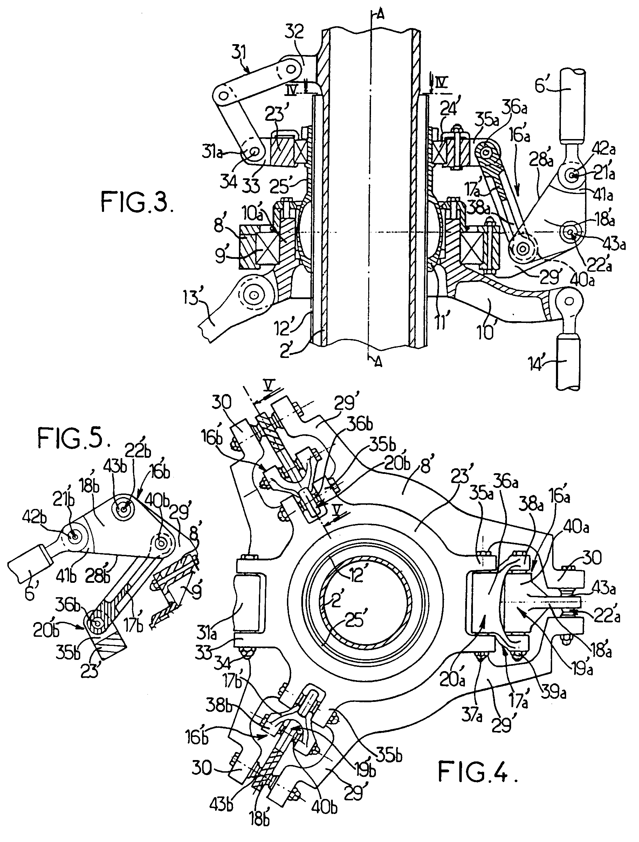

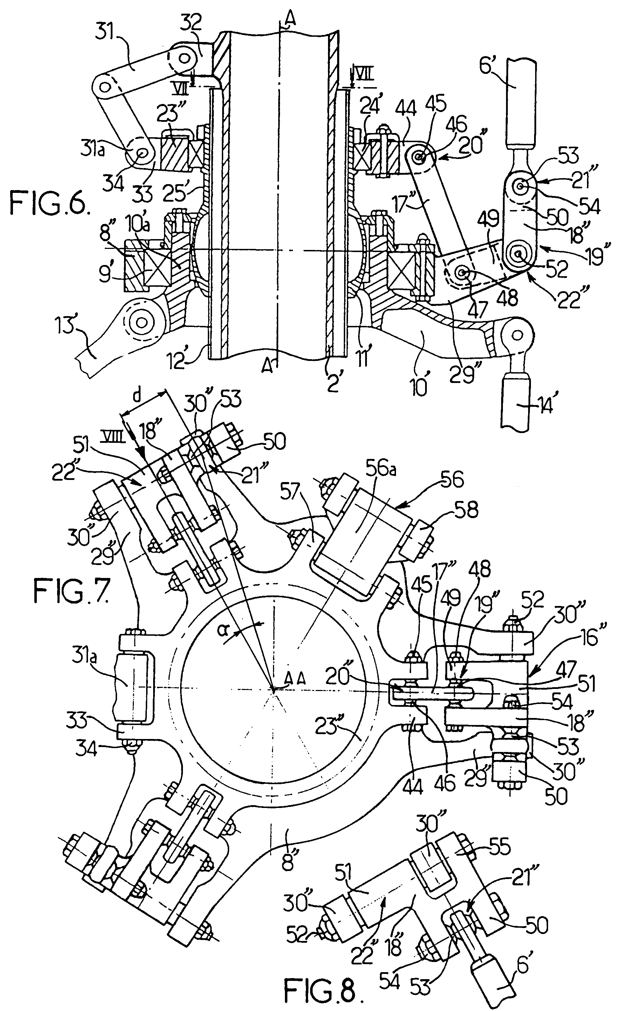

Un exemple de réalisation du dispositif schématique des figures 1 et 2 pour un hélicoptère tripale est représenté sur les figures 3 à 5, mais bien évidemment le dispositif de l'invention peut être appliqué à tout autre type de rotor, quel que soit son nombre de pales.

Sur la figure 3, on retrouve un mât rotor 2' entraîné en rotation autour de son axe longitudinal A-A (qui est l'axe du rotor) à l'intérieur d'un guide tubulaire fixe 12' autour duquel sont montés axialement coulissants une rotule centrale 11' et un guide tubulaire secondaire 25' qui prolonge la rotule vers le moyeu (non représenté) au sommet du mât 2'. On retrouve également un plateau non-tournant 10' inclinable par son moyeu 10'a autour de la rotule 11', et retenu par un compas non-tournant 13' en étant manoeuvré en translation axiale et en inclinaison par trois actionneurs tels que 14', ainsi qu'un plateau tournant 8' monté en rotation autour du moyeu 10'a par le roulement 9', et présentant, pour chaque pale, l'un respectivement de trois bras radiaux 29' évidés et dont l'extrémité est aménagée en chape 30. On retrouve encore un plateau tournant secondaire 23', monté rotatif par un roulement 24' autour du guide tubulaire secondaire 25', et de ce fait solidaire en translation axiale de la rotule 11' et donc des plateaux non-tournant 10' et tournant 8', mais bloqué en inclinaison par rapport au mât rotor 2', ce plateau tournant secondaire 23' étant relié à chacune des trois pales du rotor par l'une respectivement de trois liaisons articulées à deux leviers et quatre articulations chacune, qui est articulée dans la chape 30 d'un bras 29' correspondant du plateau tournant 8' et par ailleurs sur l'extrémité inférieure d'une bielle de pas 6' correspondante, elle-même reliée à un levier de pas pour commander le pas de la pale correspondante.

Dans cet exemple, à la place du doigt d'entraînement 26 et de la liaison axiale coulissante 27 des figures 1 et 2, le plateau tournant secondaire 23' est entraîné en rotation par un compas tournant 31 articulé par son extrémité supérieure dans une chape radiale externe 32 du mât 2' et par son extrémité inférieure, agencée en douille ou manchon 31a, à pivotement dans une grande chape radiale externe 33 du plateau tournant secondaire 23', autour d'un axe boulonné 34 sensiblement perpendiculaire au plan radial passant par l'axe A-A et par le milieu de la chape 33.

Le plateau tournant 8' peut être entraîné en rotation par le plateau tournant secondaire 23', selon une variante de réalisation non représentée de l'invention, au moyen d'un compas tournant, dont la structure est analogue à celle du compas tournant 31 d'entraînement du plateau tournant secondaire 23' par le mât rotor 2'.

Mais, dans la réalisation des figures 3 à 5, le plateau tournant secondaire 23' entraîne en rotation le plateau tournant 8' par l'intermédiaire d'une liaison articulée 16'a, représentée sur la droite des figures 3 et 4, et dont la structure est différente de celle des deux autres liaisons articulées 16'b, en haut et en bas sur la gauche de la figure 4 et sur la figure 5.

Pour la liaison articulée 16'a faisant fonction de compas tournant, le plateau tournant secondaire 23' présente une grande chape radiale externe 35a, diamétralement opposée à la chape 33 d'articulation du compas tournant 31. Dans cette chape 35a, l'extrémité supérieure agencée en douille ou manchon 36a d'un premier levier 17'a de la liaison 16'a est retenue autour d'un axe transversal de pivot boulonné 37a selon une liaison pivotante constituant la troisième articulation 20'a de la liaison 16'a, reliant cette dernière au plateau tournant secondaire 23', tandis que l'extrémité inférieure du levier 17'a est agencée en chape 38a, dans laquelle est également retenu(e) par une liaison pivotante, autour d'un axe de pivot transversal boulonné 39a, la douille ou le manchon 40a ménagé(e) à une extrémité du grand côté 28'a du second levier 18'a de forme triangulaire de la liaison 16'a, pour former la première articulation 19'a de cette liaison 16'a, articulant ses deux leviers 17'a et 18'a l'un sur l'autre. Les axes de pivot 37a et 39a sont sensiblement parallèles l'un à l'autre et perpendiculaires au plan radial passant par l'axe A-A et par le milieu des chapes 35a et 38a.

L'autre extrémité du grand côté 28'a du levier triangulaire 18'a est aménagée en chape 41a dans laquelle est retenue autour d'un axe transversal une rotule 42a montée dans un embout à rotule constituant l'extrémité inférieure de la bielle de pas 6', pour former la troisième articulation 21'a de cette liaison 16'a, reliant son second levier 18'a à la bielle de pas 6'.

Enfin, pour constituer la quatrième articulation 22'a reliant la liaison 16'a au plateau tournant 8', le troisième sommet du levier triangulaire 18'a est équipé d'une rotule 43a retenue par un axe transversal dans la chape 30 à l'extrémité du bras 29' correspondant du plateau tournant 8'.

Pour chacune des deux autres liaisons articulées 16'b, le plateau tournant secondaire 23' présente une petite chape radiale externe 35b dans laquelle est retenue par un axe transversal une rotule 36b montée dans l'extrémité supérieure du premier levier 17'b pour constituer la seconde articulation 20'b de cette liaison 16'b, la reliant au plateau tournant secondaire 23'. L'extrémité inférieure du levier 17'b est aménagée en chape 38b dans laquelle est retenue par un axe transversal une rotule 40b montée dans l'extrémité inférieure du grand côté 28'b du second levier 18'b en forme de bras triangulaire de cette liaison 16'b, pour former la première articulation 19'b articulant l'un sur l'autre les deux leviers 17'b et 18'b de cette liaison 16'b. Pour constituer la troisième articulation 21'b de cette liaison 16'b, l'autre extrémité du grand côté 28'b du bras triangulaire 18'b est aménagée en chape 41b dans laquelle une petite douille 42b à l'extrémité inférieure de la bielle de pas 6' correspondante est retenue autour d'un axe transversal par une liaison pivotante.

Enfin, comme pour la liaison 16'a, chaque liaison 16'b est articulée au bras 29' correspondant du plateau tournant 8' par une rotule 43b montée dans le troisième sommet du bras triangulaire 18'b et retenue par un axe transversal dans la chape 30 du bras 29' correspondant pour constituer la quatrième articulation 22'b de cette liaison 16'b.

Ainsi, lorsque le plateau tournant 8' est incliné avec le plateau non-tournant 10', chacun des bras 29' peut manoeuvrer angulairement le bras triangulaire 18'a ou 18'b de la liaison articulée 16'a ou 16'b correspondante, pour actionner la bielle de pas 6' et commander ainsi le pas de la pale correspondante de la manière décrite ci-dessus en référence à la figure 2.

La disposition diamétralement opposée des grandes chapes 33 et 35a sur le plateau tournant secondaire 23' avec la grande chape 33 au milieu des petites chapes 35b, procure un bon équilibrage du rotor tripale. Mais il est bien entendu possible que, sur un tel rotor tripale, la grande chape 33 soit diamétralement opposée à l'une des deux petites chapes 35b du plateau tournant secondaire 35b, et au milieu entre l'autre petite chape 35b et la grande chape 35a.

De même, sur un rotor quadripale, la grande chape 33 d'articulation du compas tournant 31 sur le plateau tournant secondaire 23' peut occuper l'une des quatre positions possibles, au milieu entre deux chapes 35a et/ou 35b voisines sur le plateau secondaire 23' pour sa liaison à deux des liaisons articulées 16', et il en sera de même sur un rotor à cinq, six, sept pales ou plus.

Les figures 6 à 8 représentent une variante du dispositif qui ne se distingue essentiellement de celui des figures 3 à 5 que par la structure de chacune des trois liaisons articulées 16", identiques l'une à l'autre dans cette variante, et par la structure des plateaux tournant 8" et tournant secondaire 23". Pour le reste, les éléments identiques à ceux des figures 3 à 5 sont repérés par les mêmes références numériques.

En particulier, on retrouve que le plateau tournant 8" est monté rotatif par le roulement 9' autour du moyeu 10'a du plateau non-tournant 10', retenu en rotation par le compas non-tournant 13' et manoeuvré par les actionneurs 14' en inclinaison par rapport à l'axe rotor A-A et au mât 2' par son moyeu 10'a autour de la rotule 11', et en translation axiale avec la rotule 11' et le guide tubulaire secondaire 25', ainsi qu'avec le plateau tournant secondaire 23" et le roulement 24' permettant sa rotation sur le guide 25', autour du guide tubulaire fixe 12' entourant le mât rotor 2'. On retrouve également le compas tournant 31, dont une extrémité est articulée dans la chape 32 du mât 2' et l'autre est agencée en douille 31a articulée à pivotement dans une grande chape 33 du plateau tournant secondaire 23" autour d'un axe transversal 34, pour entraîner le plateau tournant secondaire 23" en rotation avec le mât rotor 2'.

Mais, pour chacune des trois liaisons articulées 16", le plateau tournant secondaire 23" présente une petite chape radiale externe 44, dans laquelle un axe boulonné transversal 45 retient, pour former la seconde articulation 20" de cette liaison 16", une rotule 46 montée dans l'extrémité supérieure du premier levier rectiligne 17" de la liaison 16".

Pour former la première articulation 19" de la liaison 16", l'extrémité inférieure du levier 17" est également équipée d'une rotule 47 retenue par un axe boulonné transversal 48 dans une chape 49 à l'extrémité d'une partie sensiblement radiale du second levier 18" de cette liaison 16", ce levier 18" étant conformé en bras coudé, dont une autre partie, sensiblement verticale, a son extrémité également agencée en chape 50.

La partie centrale coudée du levier 18" comprend une douille 51, qui est retenue à pivotement autour d'un axe boulonné transversal 52 dans une grande chape 30" radiale externe à l'extrémité d'un bras radial 29" du plateau tournant 8", pour réaliser la quatrième articulation 22" de la liaison 16", sous la forme d'une liaison pivotante autour d'un axe géométrique sensiblement perpendiculaire au plan radial passant par l'axe rotor A-A et par le centre de la chape 30" et de la douille 51, correspondant au centre de cette liaison pivotante. Ce plan radial passe également sensiblement par les centres des rotules 46 et 47 et des chapes 44 et 49, ainsi que par le plan médian du levier 17".

Une caractéristique essentielle de cette variante est que la chape 50 de la partie sensiblement verticale du bras coudé 18" est latéralement déportée, parallèlement à l'axe de la liaison pivotante de la douille 51, par rapport au plan radial passant par le centre de cette liaison pivotante.

Une rotule 53, montée à l'extrémité inférieure de la bielle de pas 6', est retenue par un axe boulonné transversal 54 dans la chape 50, pour constituer la troisième articulation 21" de la liaison 16", par laquelle le bras coudé 18" de cette dernière est articulé à la bielle de pas 6'.

Ainsi, le centre de l'articulation 21" à rotule 53 est déporté latéralement par rapport au plan radial passant par l'axe rotor A-A et par le centre de la liaison pivotante constituant la quatrième articulation 22", c'est-à-dire sensiblement par le centre de la douille 51 et les centres des articulations 19" et 20" à rotules 47 et 46 respectivement. Ce déport latéral d (voir figure 7) est obtenu dans cette variante en réalisant la partie sensiblement verticale du bras coudé 18" en forme de H (voir figure 8) rattaché latéralement à la douille 51 de la partie centrale coudée du bras 18" par l'une des deux branches parallèles du H qui sont du côté opposé à la chape 50 formée par les deux autres branches parallèles du H, tandis que l'autre branche 55 vers la partie centrale forme, avec la douille 51, une autre chape dans laquelle est retenue par l'axe 52 l'une des deux branches de la chape 30" du bras évidé 29" correspondant du plateau tournant 8". Ce dernier est entraîné en rotation par le plateau tournant secondaire 23" à l'aide d'un compas tournant 56, dont la branche supérieure 56a est articulée par des liaisons pivotantes autour d'axes parallèles l'un à l'autre et perpendiculaires à l'axe rotor A-A, d'une part, par son extrémité supérieure dans une grande chape radiale externe 57 du plateau tournant secondaire 23", et, d'autre part, par son extrémité inférieure dans une grande chape 58 de l'extrémité supérieure de la branche inférieure du compas 56, laquelle branche inférieure est articulée à son extrémité inférieure par un embout à rotule dans une petite chape radiale externe du plateau tournant 8", d'une manière non représentée sur les figures 6 à 8.

L'intérêt de cette variante est que le déport latéral d du centre de la troisième articulation 21" de la liaison articulée 16" par rapport au plan radial passant par les centres des autres articulations de cette liaison 16", et en particulier de la quatrième articulation 22", correspond à un déphasage entre la commande monocyclique classique, liée aux plateaux cycliques 10' et 8", et la commande bicyclique introduite par les liaisons articulées 16" du dispositif de l'invention, ce déphasage étant une fonction croissante du déport latéral d.

On peut ainsi régler la phase de la commande bicyclique par rapport à la phase de la commande monocyclique, par le choix d'un déport latéral d correspondant. Le déphasage entre ces deux commandes peut être exprimé par l'angle au centre $\alpha$ entre les plans radiaux passant par l'axe rotor A-A et l'un par le centre de l'articulation 21", et l'autre par le centre de l'articulation 22".

En effet, pour une inclinaison des plateaux 10' et 8" sur l'axe A-A, si $\Psi_r$ est l'angle entre une origine angulaire quelconque autour de l'axe A-A et la ligne azimutale de plus grande pente des plateaux 10' et 8", et si $\Psi_2$ et $\Psi_1$ sont les angles entre cette origine angulaire et les plans radiaux passant par l'axe A-A et respectivement par le centre de l'articulation 22", qui est un point fixe sur le plateau tournant 8", et par le centre de l'articulation 21", décalé latéralement de d, la commande monocyclique produit un déplacement maximum du centre de l'articulation 21" lorsque $\Psi_1 = \Psi_r$, et un déplacement maximum du centre de l'articulation 22" lorsque $\Psi_2 = \Psi_r$, tandis que la commande bicylique produit son effet maximum lorsque le centre de l'articulation 22" a son déplacement maximum, donc lorsque $\Psi_2 = \Psi_r$. La commande bicyclique est donc déphasée de la commande monocyclique de la valeur $\alpha = \Psi_2 - \Psi_1$.

Ainsi, en ajustant par construction la valeur du déport latéral d, on peut régler le déphasage $\alpha$ sur une valeur souhaitée.

## Revendications

1. Dispositif de commande du pas des pales d'un rotor (1) de giravion, en particulier d'un rotor principal d'hélicoptère, sur lequel chaque pale (4) est, d'une part, entraînée en rotation autour d'un axe (A-A) de rotation d'un mât rotor (2, 2') par l'intermédiaire d'un moyeu (3), et, d'autre part, solidaire en rotation, autour d'un axe (X-X) longitudinal de changement de pas, d'un levier de pas (5) articulé à une bielle de pas (6, 6') reliée à un plateau tournant (8, 8', 8") avec le mât rotor (2, 2') et appartenant à un mécanisme (7) à plateaux cycliques, dans lequel le plateau tournant (8, 8', 8") est monté en rotation sur un plateau non-tournant (10, 10') pouvant coulisser axialement le long du mât rotor (2, 2') et s'incliner dans toute direction par rapport au mât rotor, sous l'action d'actionneurs (14, 14') de commandes de vol, caractérisé en ce qu'il comprend un plateau tournant secondaire (23, 23', 23"), solidaire en rotation du mât rotor (2, 2') et en translation axiale du plateau non-tournant (10, 10'), mais non inclinable par rapport au mât rotor (2, 2'), et, pour chaque pale, une liaison articulée (16, 16'a-b, 16") à deux leviers (17-18; 17'a-b-18'a-b ; 17"-18") et quatre articulations, telle que ses deux leviers s'articulent l'un sur l'autre par une première articulation (19, 19'a-b, 19"), qu'un premier levier (17, 17'a-b, 17") s'articule par ailleurs par une seconde articulation (20, 20'a-b, 20") sur un point fixe en repère tournant avec le plateau tournant secondaire (23, 23', 23"), et que le second levier (18, 18'a-b, 18") s'articule par ailleurs sur la bielle de pas (6, 6') correspondante par une troisième articulation (21, 21'a-b, 21"), distincte de l'articulation (15) de la bielle de pas (6, 6') sur le levier de pas (5), et le second levier (18, 18'a-b, 18") est de plus articulé sur un point fixe en repère tournant (29, 29', 29") avec le plateau tournant (8, 8', 8") par la quatrième articulation (22, 22'a-b, 22"), distincte des autres articulations, de sorte que les inclinaisons des plateaux cycliques par les actionneurs (14, 14') induisent des manoeuvres angulaires des leviers (17, 18 ; 17'a-b, 18'a-b ; 17", 18") de chaque liaison articulée (16, 16'a-b, 16") commandant le pas de la pale (4) correspondante par la manoeuvre de la bielle de pas (6, 6') correspondante.

2. Dispositif de commande de pas selon la revendication 1, caractérisé en ce que, pour chaque liaison articulée (16, 16'a-b, 16"), la première articulation (19, 19'a-b, 19") relie les deux leviers (17, 17'a-b, 17", 18, 18'a-b, 18") par l'une de leurs extrémités, l'autre extrémité du premier levier (17, 17'a-b, 17") étant reliée à un point fixe du plateau tournant secondaire (23, 23', 23") par la seconde articulation (20, 20'a-b, 20"), tandis qu'une autre extrémité du second levier (18, 18'a-b, 18") est reliée par la troisième articulation (21, 21'a-b, 21") à une extrémité de la bielle de pas (6, 6') correspondante, articulée (15) par son autre extrémité sur une extrémité du levier de pas (5), la quatrième articulation (22, 22'a-b, 22") reliant le second levier (18, 18'a-b, 18") à l'extrémité d'un bras (29, 29', 29") solidaire du plateau tournant (8, 8', 8").

3. Dispositif de commande de pas selon l'une des revendications 1 et 2, dans lequel le plateau non-tournant (10, 10') est monté inclinable autour d'une rotule (11, 11') montée elle-même coulissante axialement autour d'un guide tubulaire fixe (12, 12') entourant le mât rotor (2, 2'), caractérisé en ce que le plateau tournant secondaire (23, 23', 23") est solidaire de la rotule (11, 11') en translation axiale.

4. Dispositif de commande de pas selon la revendication 3, caractérisé en ce que le plateau tournant secondaire (23, 23', 23") est monté rotatif à l'aide d'au moins un roulement (24, 24') sur un guide tubulaire secondaire (25, 25'), solidaire de la rotule (11, 11') en translation axiale autour du guide tubulaire fixe (12, 12').

5. Dispositif de commande de pas selon l'une quelconque des revendications 1 à 4, caractérisé en ce que le plateau tournant secondaire (23', 23") est entraîné en rotation par au moins un compas tournant (31), articulé d'une part sur le plateau tournant secondaire (23', 23") et d'autre part sur le mât rotor (2').

6. Dispositif de commande de pas selon l'une quelconque des revendications 1 à 4, caractérisé en ce que le plateau tournant secondaire (23) est entraîné en rotation par au moins un doigt (26), fixé au mât rotor (2) en saillie latéralement sur ce dernier, et relié au plateau tournant secondaire (23) par une liaison axialement coulissante (27).

7. Dispositif de commande de pas selon l'une quelconque des revendications 1 à 6, caractérisé en ce que le plateau tournant secondaire (23") entraîne en rotation le plateau tournant (8") par au moins un compas tournant (56), articulé sur le plateau tournant (8") et sur le plateau tournant secondaire (23") par au moins une liaison pivotante (57) autour d'un axe sensiblement perpendiculaire à l'axe rotor (A-A).

8. Dispositif de commande de pas selon l'une quelconque des revendications 1 à 6, caractérisé en ce que le plateau tournant secondaire (23') entraîne en rotation le plateau tournant (8') par au moins une liaison articulée (16'a) faisant fonction de compas tournant.

9. Dispositif de commande de pas selon la revendication 8, caractérisé en ce que, pour ladite liaison articulée (16'a) faisant fonction de compas tournant, la première articulation (19'a) est constituée d'une liaison pivotante comprenant une chape (38a) du premier (17'a) ou du second levier (18'a) dans laquelle une douille (40a) respectivement du second (18'a) ou du premier levier (17'a) est montée pivotante autour d'un axe (39a) sensiblement perpendiculaire à l'axe rotor (A-A), la seconde articulation (20'a) est constituée d'une liaison pivotante comprenant une chape (35a) du plateau tournant secondaire (23') ou du premier levier (17'a) dans laquelle une douille (36a) respectivement du premier levier (17'a) ou du plateau tournant secondaire (23') est montée pivotante autour d'un axe (37a) sensiblement perpendiculaire à l'axe rotor (A-A), la troisième articulation (21'a) est constituée d'une liaison à rotule (42a) montée dans le second levier (18'a) ou la bielle de pas (6') et retenue dans une chape (41a) respectivement de la bielle de pas (6') ou du second levier (18'a), et la quatrième articulation (22'a) est constituée d'une liaison à rotule (43a) montée dans le second levier (18'a) ou un bras (29') du plateau tournant (8') et retenue dans une chape (30) respectivement dudit bras (29') du plateau tournant (8') ou du second levier (18'a).

10. Dispositif de commande de pas selon l'une quelconque des revendications 1 à 9, caractérisé en ce que, pour chaque liaison articulée (16, 16'a, 16'b), le second levier (18, 18'a, 18'b) est constitué d'un bras triangulaire dont les deux sommets aux extrémités d'un premier côté (28, 28'a, 28'b) sont reliés par la première (19, 19'a, 19'b) et la troisième (21, 21'a, 21'b) articulations respectivement au premier levier (17, 17'a, 17'b) et à la bielle de pas (6, 6') correspondante, et dont le troisième sommet du bras triangulaire (18, 18'a, 18'b) est relié par la quatrième articulation (22, 22'a, 22'b) à un bras (29, 29') correspondant du plateau tournant (8, 8').

11. Dispositif de commande de pas selon la revendication 10, caractérisé en ce que, pour au moins une liaison articulée (16'b), le plateau tournant secondaire (23') présente une chape (35b) dans laquelle est retenue une rotule (36b) d'articulation d'une extrémité du premier levier (17'b) correspondant, dont l'autre extrémité est aménagée en chape (38b) dans laquelle est retenue une rotule (40b) d'articulation de l'un des sommets aux extrémités du premier côté (28'b) du bras triangulaire (18'b), le sommet à l'autre extrémité du premier côté (28'b) dudit bras triangulaire (18'b) étant aménagé en chape (41b) dans laquelle la bielle de pas (6') correspondante est articulée par un pivot (42b), le troisième sommet du bras triangulaire (18'b) étant articulé par une rotule (43b) dans une chape (30) ménagée à l'extrémité du bras (29') correspondant du plateau tournant (8').

12. Dispositif de commande de pas selon l'une quelconque des revendications 1 à 8, caractérisé en ce que, pour chaque liaison articulée (16"), le second levier (18") est constitué par un bras coudé, dont les extrémités sont reliées au premier levier (17") et à la bielle de pas (6') correspondante respectivement par la première (19") et la troisième (21") articulations, qui sont des articulations à rotule (47, 53), et dont la partie centrale coudée est reliée à un bras (29") correspondant du plateau tournant (8") par la quatrième articulation (22"), qui est une liaison pivotante (51) autour d'un axe (52) sensiblement perpendiculaire au plan radial passant par l'axe rotor (A-A) et par le centre de la liaison pivotante (51).

13. Dispositif de commande de pas selon la revendication 12, caractérisé en ce que le centre de l'articulation à rotule (53) constituant la troisième articulation (21") est déporté latéralement (d) par rapport au plan radial passant par l'axe rotor (A-A) et par le centre de la liaison pivotante (51) constituant la quatrième articulation (22").

14. Dispositif de commande de pas selon la revendication 13, caractérisé en ce que, pour chaque liaison articulée (16"), le plateau tournant secondaire (23") présente une chape (44) dans laquelle est retenue, pour former la seconde articulation (20"), une rotule (46) montée dans une extrémité du premier levier (17"), dont l'autre extrémité est également équipée d'une rotule (47) retenue, pour former la première articulation (19"), dans une chape (49) à une extrémité du bras coudé (18"), dont la partie centrale coudée comprend une douille (51) retenue à pivotement, pour former la quatrième articulation (22"), autour d'un axe (52) dans une chape (30") ménagée à l'extrémité du bras (29") correspondant du plateau tournant (8"), l'autre extrémité du bras coudé (18") présentant une chape (50) déportée parallèlement à l'axe (52) de pivot de la douille (51), et dans laquelle est retenue, pour former la troisième articulation (21"), une rotule (53) montée dans l'extrémité correspondante de la bielle de pas (6') correspondante.

**Claims**

1. Device for controlling the pitch of the blades of a rotorcraft rotor (1), particularly of a helicopter main rotor, in which each blade (4) is, on the one hand, driven in rotation about an axis of rotation (A-A) of a rotor mast (2, 2') via a hub (3) and, on the other hand, secured in terms of rotation about a longitudinal pitch-change axis (X-X) to a pitch lever (5) articulated to a pitch rod (6, 6') joined to a plate (8, 8', 8") which rotates with the rotor mast (2, 2') and belonging to a swashplates mechanism (7), in which the rotating plate (8, 8', 8") is mounted so that it can rotate on a non-rotating plate (10, 10') which can slide axially along the rotor mast (2, 2') and be inclined in any direction with respect to the rotor mast under the action of flight-control actuators (14, 14'), characterized in that it comprises a secondary rotating plate (23, 23', 23") secured in terms of rotation to the rotor mast (2, 2') and secured in terms of axial translation to the non-rotating plate (10, 10') but which cannot be inclined with respect to the rotor mast (2, 2') and, for each blade, an articulated link (16, 16'a-b, 16") with two levers (17-18; 17'a-b - 18'a-b; 17"-18") and four articulations, such that its two levers are articulated together by a first articulation (19, 19'a-b, 19"), in that a first lever (17, 17'a-b, 17") is articulated moreover by a second articulation (20, 20'a-b, 20") to a point which is stationary in a reference frame which rotates with the secondary rotating plate (23, 23', 23"), and in that the second lever (18, 18'a-b, 18") is moreover articulated to the corresponding pitch rod (6, 6') by a third articulation (21, 21'a-b, 21"), distinct from the articulation (15) by means of which the pitch rod (6, 6') is articulated to the pitch lever (5), and the second lever (18, 18'a-b, 18") is furthermore articulated to a point (29, 29', 29") which is stationary in a reference frame which rotates with the rotating plate (8, 8', 8") by the fourth articulation (22, 22'a-b, 22") which is distinct from the other articulations so that the inclinations given to the swashplates by the actuators (14, 14') give rise to angular manoeuvres of the levers (17, 18; 17'a-b, 18'a-b; 17", 18") of each articulated link (16, 16'a-b, 16") controlling the pitch of the corresponding blade (4) through the manoeuvring of the corresponding pitch rod (6, 6').

2. Pitch-control device according to Claim 1, characterized in that, for each articulated link (16, 16'a-b, 16"), the first articulation (19, 19'a-b, 19") joins the two levers (17, 17'a-b, 17", 18, 18'a-b, 18") by one of their ends, the other end of the first lever (17, 17'a-b, 17") being joined to a stationary point of the secondary rotating plate (23, 23', 23") by the second articulation (20, 20'a-b, 20"), while another end of the second lever (18, 18'a-b, 18") is joined by the third articulation (21, 21'a-b, 21") to one end of the corresponding pitch rod (6, 6'), articulated (15) by its other end to one end of the pitch lever (5), the fourth articulation (22, 22'a-b, 22") joining the second lever (18, 18'a-b, 18") to the end of an arm (29, 29', 29") secured to the rotating plate (8, 8', 8").

3. Pitch-control device according to any one of Claims 1 and 2, in which the non-rotating plate (10, 10') is mounted so that it can be inclined about a ball joint (11, 11') itself mounted so that it can slide axially around a stationary tubular guide (12, 12') surrounding the rotor mast (2, 2'), characterized in that the secondary rotating plate (23, 23', 23") is secured to the ball joint (11, 11') in terms of axial translation.

4. Pitch-control device according to Claim 3, characterized in that the secondary rotating plate (23, 23', 23") is mounted so that it can rotate with the aid of at least one rolling-elements bearing (24, 24') on a secondary tubular guide (25, 25') secured to the ball joint (11, 11') in terms of axial translation about the stationary tubular guide (12, 12').

5. Pitch-control device according to any one of Claims 1 to 4, characterized in that the secondary rotating plate (23', 23") is driven in rotation by at least one rotating scissors fitting (31) articulated on the one hand to the secondary rotating plate (23', 23") and, on the other hand, to the rotor mast (2').

6. Pitch-control device according to any one of Claims 1 to 4, characterized in that the secondary rotating plate (23) is driven in rotation by at least one finger (26) fixed to the rotor mast (2) and projecting laterally therefrom, and joined to the secondary rotating plate (23) by an axially sliding link (27).

7. Pitch-control device according to any one of Claims 1 to 6, characterized in that the secondary rotating plate (23") drives the rotating plate (8") in rotation via at least one rotating scissors fitting (56) articulated to the rotating plate (8") and to the secondary rotating plate (23") via at least one pivoting link (57) which pivots about an axis substantially perpendicular to the rotor axis (A-A).

8. Pitch-control device according to any one of Claims 1 to 6, characterized in that the secondary rotating plate (23') drives the rotating plate (8') in rotation via at least one articulated link (16'a) acting as a rotating scissors fitting.

9. Pitch-control device according to Claim 8, characterized in that, for the said articulated link (16'a) acting as a rotating scissors fitting, the first articulation (19'a) consists of a pivoting link comprising a clevis (38a) of the first (17'a) or of the second lever (18'a) in which clevis a bushing (40a) respectively of the second (18'a) or of the first lever (17'a) is mounted so that it can pivot about a pin (39a) substantially perpendicular to the rotor axis (A-A), the second articulation (20'a) consists of a pivoting link comprising a clevis (35a) of the secondary rotating plate (23') or of the first lever (17'a) in which clevis a bushing (36a) respectively of the first lever (17'a) or of the secondary rotating plate (23') is mounted so that it can pivot about a pin (37a) substantially perpendicular to the rotor axis (A-A), the third articulation (21'a) consists of a ball joint (42a) mounted in the second lever (18'a) or the pitch rod (6') and held in a clevis (41a) respectively of the pitch rod (6') or of the second lever (18'a), and the fourth articulation (22'a) consists of a ball joint (43a) mounted in the second lever (18'a) or an arm (29') of the rotating plate (8') and held in a clevis (30) respectively of said arm (29') of the rotating plate (8') or of the second lever (18'a).

10. Pitch-control device according to any one of Claims 1 to 9, characterized in that, for each articulated link (16, 16'a, 16'b), the second lever (18', 18'a, 18'b) consists of a triangular arm, of which the two vertices at the ends of one first side (28, 28'a, 28'b) are joined by the first (19, 19'a, 19'b) and the third (21, 21'a, 21'b) articulations respectively to the first lever (17, 17'a, 17'b) and to the corresponding pitch rod (6, 6'), and of which the third vertex of the triangular arm (18, 18'a, 18'b) is joined by the fourth articulation (22, 22'a, 22'b) to a corresponding arm (29, 29') of the rotating plate (8, 8').

11. Pitch-control device according to Claim 10, characterized in that, for at least one articulated link (16'b), the secondary rotating plate (23') has a clevis (35b) in which a ball joint (36b) is held for articulating one end of the first corresponding lever (17'b), the other end of which is formed as a clevis (38b) in which there is held a ball joint (40b) for articulating one of the vertices at the ends of the first side (28'b) of the triangular arm (18'b), the vertex at the other end of the first side (28'b) of said triangular arm (18'b) being formed as a clevis (41b) in which the corresponding pitch rod (6') is articulated by a pivot (42b), the third vertex of the triangular arm (18'b) being articulated by a ball joint (43b) in a clevis (30) formed at the end of the corresponding arm (29') of the rotating plate (8').

12. Pitch-control device according to any one of Claims 1 to 8, characterized in that, for each articulated link (16"), the second lever (18") consists of a cranked arm, the ends of which are joined to the first lever (17") and to the corresponding pitch rod (6') respectively by the first (19") and third (21") articulations, which are ball joint articulations (47, 53), and the cranked central part of which is joined to a corresponding arm (29") of the rotating plate (8") by the fourth articulation (22") which is a pivoting link (51) pivoting about a pin (52) substantially perpendicular to the radial plane passing through the rotor axis (A-A) and through the centre of the pivoting link (51).

13. Pitch-control device according to Claim 12, characterized in that the centre of the ball joint articulation (53) constituting the third articulation (21") is laterally offset (d) with respect to the radial plane passing through the rotor axis (A-A) and through the centre of the pivoting link (51) constituting the fourth articulation (22").

14. Pitch-control device according to Claim 13, characterized in that, for each articulated link (16"), the secondary rotating plate (23") has a clevis (44) in which there is held, in order to form the second articulation (20"), a ball joint (46) mounted in one end of the first lever (17"), the other end of which is also equipped with a ball joint (47) held, in order to form the first articulation (19"), in a clevis (49) at one end of the cranked arm (18"), the cranked central part of which comprises a bushing (51) held such that it can pivot, in order to form the fourth articulation (22"), about a pin (52) in a clevis (30") formed at the end of the corresponding arm (29") of the rotating plate (8"), the other end of the cranked arm (18") having a clevis (50) which is offset parallel to the pivot pin (52) of the bushing (51), and in which there is held, in order to form the third articulation (21"), a ball joint (53) mounted in the corresponding end of the corresponding pitch rod (6').

**Patentansprüche**

1. Vorrichtung zur Steuerung des Anstellwinkels der Blätter eines Drehflügler-Rotors (1), insbesondere eines Hubschrauber-Hauptrotors, wobei jedes Blatt (4) einerseits um eine Drehachse (A-A) eines Rotormasts (2, 2') mittels einer Nabe (3) und andererseits drehvereint um eine Längsachse (X-X) zur Anstellwinkeländerung von einem Anstellwinkelhebel (5) drehangetrieben wird, der an eine Anstellwinkelstange (6, 6') angelenkt ist, die über eine Drehplatte (8, 8', 8") mit dem Rotormast (2, 2') verbunden ist und zu einem Mechanismus (7) mit zyklischen Platten gehört, bei dem die Drehplatte (8, 8', 8") auf einer nichtdrehenden Platte (10, 10') drehbar angebracht ist, die sich unter der Einwirkung von Betätigungsgliedern (14, 14') von Flugbefehlen axial entlang dem Rotormast (2, 2') verschieben und in jeder Richtung in bezug auf den Rotormast neigen läßt, **dadurch gekennzeichnet**, daß sie eine mit dem Rotormast (2, 2') drehvereinte und mit der nichtdrehenden Platte (10, 10') in der axialen Translationsbewegung vereinte, aber in bezug auf den Rotormast (2, 2') nicht neigbare Nebendrehplatte (23, 23', 23") und für jedes Blatt eine gelenkige Verbindung (16, 16'$_{a-b}$, 16") mit zwei Hebeln (17-18; 17'$_{a-b}$-18'$_{a-b}$, 17"-18") und vier Gelenken aufweist, die so beschaffen ist, daß ihre beiden Hebel miteinander durch ein erstes Gelenk (19, 19'$_{a-b}$, 19") gelenkig verbunden sind, daß ein erster Hebel (17, 17'$_{a-b}$, 17") überdies durch ein zweites Gelenk (20, 20'$_{a-b}$, 20") mit einem festen, sich mit der Nebendrehplatte (23, 23', 23") drehenden Bezugspunkt gelenkig verbunden ist und daß der zweite Hebel (18, 18'$_{a-b}$, 18") überdies mit der entsprechenden Anstellwinkelstange (6, 6') durch ein drittes, gegenüber dem die Anstellwinkelstange (6, 6') mit dem Anstellwinkelhebel (5) verbindenden Gelenk (15) verschiedenes Gelenk (21, 21'$_{a-b}$, 21") gelenkig verbunden ist und der zweite Hebel (18, 18'$_{a-b}$, 18") darüber hinaus mit einem festen, sich mit der Drehplatte (8, 8', 8") drehenden Bezugspunkt (29, 29', 29") durch das vierte, gegenüber den anderen Gelenken verschiedene Gelenk (22, 22'$_{a-b}$, 22") gelenkig verbunden ist, so daß die Neigungen der zyklischen Platten durch die Betätigungsglieder (14, 14') Winkelbetätigungen der Hebel (17, 18; 17'$_{a-b}$, 18'$_{a-b}$; 17", 18") jeder gelenkigen Verbindung (16, 16'$_{a-b}$, 16") bewirken, die den Anstellwinkel des entsprechenden Blattes (4) durch die Betätigung der entsprechenden Anstellwinkelstange (6, 6') steuert.

2. Vorrichtung zur Steuerung des Anstellwinkels nach Anspruch 1, **dadurch gekennzeichnet**, daß für jede gelenkige Verbindung (16, 16'$_{a-b}$, 16") das erste Gelenk (19, 19'$_{a-b}$, 19") die beiden Hebel (17, 17'$_{a-b}$, 17", 18, 18'$_{a-b}$, 18") durch eines ihrer Enden verbindet, wobei das andere Ende des ersten Hebels (17, 17'$_{a-b}$, 17") mit einem festen Punkt der Nebendrehplatte (23, 23', 23") durch das zweite Gelenk (20, 20'$_{a-b}$, 20") verbunden ist, während ein anderes Ende des zweiten Hebels (18, 18'$_{a-b}$, 18") durch das dritte Gelenk (21, 21'$_{a-b}$, 21") mit einem Ende der entsprechenden Anstellwinkelstange (6, 6') verbunden ist, die durch ihr anderes Ende mit einem Ende des Anstellwinkelhebels (5) gelenkig (15) verbunden ist, wobei das vierte Gelenk (22, 22'$_{a-b}$, 22") den zweiten Hebel (18, 18'$_{a-b}$, 18") mit dem Ende eines mit der Drehplatte (8, 8', 8") vereinten Armes (29, 29', 29") verbindet.

3. Vorrichtung zur Steuerung des Anstellwinkels nach einem der Ansprüche 1 und 2, bei der die nichtdrehende Platte (10, 10') um einen Kugelkopf (11, 11') neigbar angebracht ist, der selbst axial verschiebbar um eine den Rotormast (2, 2') umfassende feste rohrförmige Führung (12, 12') herum angebracht ist, **dadurch gekennzeichnet**, daß die Nebendrehplatte (23, 23', 23") mit dem Kugelkopf (11, 11') in der axialen Translationsbewegung vereint ist.

4. Vorrichtung zur Steuerung des Anstellwinkels nach Anspruch 3, **dadurch gekennzeichnet**, daß die Nebendrehplatte (23, 23', 23") mit Hilfe wenigstens eines Wälzlagers (24, 24') auf einer rohrförmigen Nebenführung (25, 25') drehbar angebracht ist, die mit dem Kugelkopf (11, 11') bei axialer Translationsbewegung um die feste rohrförmige Führung (12, 12') vereint ist.

5. Vorrichtung zur Steuerung des Anstellwinkels nach einem der Ansprüche 1 bis 4, **dadurch gekennzeichnet**, daß die Nebendrehplatte (23, 23') durch mindestens einen Drehzirkel (31) drehangetrieben ist, der einerseits an der Nebendrehplatte (23, 23') und andererseits am Rotormast (2') angelenkt ist.

6. Vorrichtung zur Steuerung des Anstellwinkels nach einem der Ansprüche 1 bis 4, **dadurch gekennzeichnet**, daß die Nebendrehplatte (23) durch mindestens einen Finger (26) drehangetrieben ist, der am Rotormast (2) seitlich abstehend von diesem befestigt und mit der Nebendrehplatte (23) durch eine axial verschiebbare Verbindung (27) verbunden ist.

7. Vorrichtung zur Steuerung des Anstellwinkels nach einem der Ansprüche 1 bis 6, **dadurch gekennzeichnet**, daß die Nebendrehplatte (23") die Drehplatte (8") durch mindestens einen Drehzirkel (56) drehantreibt, der an der Drehplatte (8") und an der Nebendrehplatte (23") durch mindestens eine um eine zur Rotorachse (A-A) im wesentlichen senkrechte Achse schwenkende Verbindung (57) angelenkt ist.

8. Vorrichtung zur Steuerung des Anstellwinkels nach einem der Ansprüche 1 bis 6, **dadurch gekennzeichnet**, daß die Nebendrehplatte (23') die Drehplatte (8') durch mindestens eine gelenkige Verbindung (16'a) drehantreibt, die eine Drehzirkelfunktion ausübt.

9. Vorrichtung zur Steuerung des Anstellwinkels nach Anspruch 8, **dadurch gekennzeichnet**, daß für die die Drehzirkelfunktion ausübende gelenkige Verbindung (16'a) das erste Gelenk (19'a) aus einer Schwenkverbindung besteht, die einen Gabelkopf (38a) des ersten (17'a) oder des zweiten Hebels (18'a) enthält, in dem eine Buchse (40a) des zweiten (18'a) bzw. des ersten Hebels (17'a) schwenkbar um eine zur Rotorachse (A-A) im wesentlichen senkrechte Achse (39a) angebracht ist, das zweite Gelenk (20'a) aus einer Schwenkverbindung gebildet ist, die einen Gabelkopf (35a) der Nebendrehplatte (23') oder des ersten Hebels (17'a) enthält, in dem eine Buchse (36a) des ersten Hebels (17'a) bzw. der Nebendrehplatte (23') schwenkbar um eine zur Rotorachse (A-A) im wesentlichen senkrechte Achse (37a) angebracht ist, das dritte Gelenk (21'a) aus einer Kugelkopfverbindung (42a) gebildet ist, die im zweiten Hebel (18'a) oder der Anstellwinkelstange (6') angebracht und in einem Gabelkopf (41a) der Anstellwinkelstange (6') bzw. des zweiten Hebels (18'a) gehalten ist, und das vierte Gelenk (22'a) aus einer Kugelkopfverbindung (43a) gebildet ist, die im zweiten Hebel (18'a) oder einem Arm (29') der Drehplatte (8') angebracht und in einem Gabelkopf (30) dieses Armes (29') der Drehplatte (8') bzw. des zweiten Hebels (18'a) gehalten ist.

10. Vorrichtung zur Steuerung des Anstellwinkels nach einem der Ansprüche 1 bis 9, **dadurch gekennzeichnet**, daß für jede gelenkige Verbindung (16, 16'a, 16'b) der zweite Hebel (18, 18'a, 18'b) aus einem dreieckigen Arm gebildet ist, dessen beide Spitzen an den Enden einer ersten Seite (28, 28'a, 28'b) durch das erste (19, 19'a, 19'b) und das dritte (21, 21'a, 21'b) Gelenk mit dem ersten Hebel (17, 17'a, 17'b) bzw. mit der entsprechenden Anstellwinkelstange (6, 6') verbunden sind, und wobei die dritte Spitze des dreieckigen Armes (18, 18'a, 18'b) durch das vierte Gelenk (22, 22'a, 22'b) mit einem entsprechenden Arm (29, 29') der Drehplatte (8, 8') verbunden ist.

11. Vorrichtung zur Steuerung des Anstellwinkels nach Anspruch 10, **dadurch gekennzeichnet**, daß für wenigstens eine gelenkige Verbindung (16'b) die Nebendrehplatte (23') einen Gabelkopf aufweist (35b), in dem ein Gelenkkugelkopf (36b) des einen Endes des entsprechenden ersten Hebels (17'b) gehalten ist, dessen anderes Ende im Gabelkopf (38b) angeordnet ist, in dem ein Gelenkkugelkopf (40b) einer der Spitzen an den Enden der ersten Seite (28'b) des dreieckigen Arms (18'b) gehalten ist, wobei die Spitze am anderen Ende der ersten Seite (28'b) dieses dreieckigen Armes (18'b) im Gabelkopf (41b) angeordnet ist, in dem die entsprechende Anstellwinkelstange (6') durch eine Schwenkachse (42b) angelenkt ist, wobei die dritte Spitze des dreieckigen Armes (18'b) durch einen Kugelkopf (43b) in einem am Ende des entsprechenden Armes (29') der Drehplatte (8') angeordneten Gabelkopf (30) angelenkt ist.

12. Vorrichtung zur Steuerung des Anstellwinkels nach einem der Ansprüche 1 bis 8, **dadurch gekennzeichnet**, daß für jede gelenkige Verbindung (16") der zweite Hebel (18") durch einen gekrümmten Arm gebildet ist, dessen Enden mit dem ersten Hebel (17") bzw. mit der entsprechenden Anstellwinkelstange (6') durch das erste (19") und das dritte (21") Gelenk verbunden sind, die Kugelkopfgelenke (47, 53) sind, und dessen gekrümmter mittlerer Bereich mit einem entsprechenden Arm (29") der Drehplatte (8") durch das vierte Gelenk (22") verbunden ist, das eine Schwenkverbindung (51) um eine Achse (52) ist, die auf der durch die Rotorachse (A-A) und durch die Mitte der Schwenkverbindung (51) durchlaufenden Radialebene senkrecht steht.

13. Vorrichtung zur Steuerung des Anstellwinkels nach Anspruch 12, **dadurch gekennzeichnet**, daß die Mitte des das dritte Gelenk (21") bildenden Kugelkopfgelenks (53) in bezug auf die durch die Rotorachse (A-A) und die Mitte des das vierte Gelenk (22') bildenden Schwenkgelenks (51) gehende Radialebene seitlich (d) verschoben ist.

14. Vorrichtung zur Steuerung des Anstellwinkels nach Anspruch 13, **dadurch gekennzeichnet**, daß für jede gelenkige Verbindung (16") die Nebendrehplatte (23") einen Gabelkopf (44) aufweist, in dem zur Bildung des zweiten Gelenks (20") ein Kugelkopf (46) gehalten ist, der an einem Ende des ersten Hebels (17") angebracht ist, dessen anderes Ende auch mit einem aufgesetzten Kugelkopf (47) zur Bildung des ersten Gelenks (19") in einem Gabelkopf (49) an einem Ende des gekrümmten Armes (18") versehen ist, dessen gekrümmter mittlerer Bereich zur Bildung des vierten Gelenks (22") eine aufgesetzte Buchse (51) zum Schwenken um eine Achse (52) in einem am Ende des entsprechenden Armes (29") der Drehplatte (8") vorgesehenen Gabelkopf (30) enthält, wobei das andere Ende des gekrümmten Armes (18") einen parallel zur Schwenkachse (52) der Buchse (51) verschobenen Gabelkopf (50) aufweist, in dem zur Bildung des dritten Gelenks (21") ein am entsprechenden Ende der entsprechenden Anstellwinkelstange (6') angebrachter Kugelkopf (53) gehalten ist.

FIG.1.

FIG.2.

FIG.3.

FIG.5.

FIG.4.

FIG.6.

FIG.7.

FIG.8.